# EUROPÄISCHE PATENTSCHRIFT

(11) **EP 0 947 386 B1**
(45) Veröffentlichungstag und Bekanntmachung des Hinweises auf die Patenterteilung: **25.09.2002**
(21) Anmeldenummer: 99105512.0
(22) Anmeldetag: 17.03.1999
(51) Int. Cl.: B60R 1/06

(54) **Elektrisch verstellbarer Aussenrückspiegel**
Electrically adjustable exterior rear view mirror
Rétroviseur extérieur réglable électriquement

(30) Priorität: 01.04.1998 DE 19814712
(43) Veröffentlichungstag der Anmeldung: 06.10.1999
(73) Patentinhaber: Donnelly Hohe GmbH & Co. KG, 97903 Collenberg (DE)
(72) Erfinder: Polzer, Herwig, 63879 Miltenberg (DE)
(74) Vertreter: Böck, Bernhard, Dipl.-Ing.

(56) Entgegenhaltungen:
- EP-A- 0 090 909
- EP-A- 0 511 192
- DE-A- 3 914 039
- FR-A- 2 426 590
- US-A- 4 991 950
- US-A- 5 604 644
- PATENT ABSTRACTS OF JAPAN vol. 017, no. 697 (M-1532), 20. Dezember 1993 (1993-12-20) & JP 05 238320 A (SUZUKI MOTOR CORP), 17. September 1993 (1993-09-17)

## Beschreibung

Die Erfindung betrifft einen Außenrückspiegel nach dem Oberbegriff des Patentanspruchs 1.

Ein Kraftfahrzeug weist im Regelfall zwei Außenrückspiegel auf, um dem Fahrer die Beobachtung des nachfolgenden Verkehrs zu ermöglichen. Die Außenrückspiegel sind jeweils im Bereich vor den vorderen Seitenfenstern angeordnet. Damit die Einstellung der Außenrückspiegel abhängig von der Körpergröße und der Sitzposition des jeweiligen Fahrers angepaßt werden kann, muß das Spiegelelement relativ zur Karosserie verstellt werden können. Zur Erhöhung des Komforts für den Fahrer bei der Einstellung der Außenrückspiegel werden elektromotorische Verstellgetriebe eingesetzt, die die notwendige Stellbewegung erzeugen.

Bei den aus dem Stand der Technik bekannten elektrisch verstellbaren Außenrückspiegeln ist das Gehäuse starr mit dem Spiegelfuß verbunden und das Spiegelelement ist relativ zum Gehäuse verstellbar in dem Gehäuse gelagert. Damit das Spiegelelement auch an den Endanschlägen an keiner Stelle aus dem Gehäuse herausragt, muß es mit einem gewissen Abstand zur Gehäuseöffnung im Gehäuseinneren angeordnet sein. Außerdem ist ein Luftspalt zwischen Spiegelelement und der Innenseite des Gehäuses notwendig, um eine Schwenkbewegung des Spiegelelements in dem Gehäuse zu ermöglichen.

Durch die Anordnung des Spiegelelements im Inneren des Gehäuses wird die Reinigung des Spiegelglases mit herkömmlichen Reinigungsgeräten an Tankstellen, beispielsweise Waschanlagen mit rotierenden Bürsten, erschwert. Der überstehende Rand des Gehäuses führt außerdem zu einer Einschränkung des im Spiegelelement erkennbaren Blickfeldes, was zu einer Vergrößerung der erforderlichen Spiegelfläche führt, um ein ausreichendes Blickfeld zu erhalten. Diese Schattenbildung ist insbesondere bei der Verwendung von asphärischen Spiegelgläsern von Nachteil. Die mit der Vergrößerung der Spiegelfläche verbundene Vergrößerung des Bauvolumens des Außenrückspiegels erhöht den Luftwiderstand und das Niveau der Windgeräusche. Ebenso erhöht sich aufgrund des großen Spiegelgehäuses und der daraus resultierenden Masse- und Windkraftwirkung der Aufwand zur mechanischen Anbindung des Spiegelsystems am Fahrzeug, wie beispielsweise eine große Anbindungsfläche im sogenannten Türdreieck sowie erhöhte Steifigkeit der Türrahmenkonstruktion. Außerdem werden durch den Luftspalt zwischen Gehäuse und Spiegelelement Luftverwirbelungen verursacht, die ebenfalls zur Erhöhung des Geräuschniveaus beitragen.

Aus der gattungsgemässen JP-A-05 238320 und der US-A- 5 604 644 sind elektrisch verstellbarer Außenrückspiegel für Kraftfahrzeuge bekannt, die Spiegelelement, ein Gehäuse und einen Spiegelfuß, der am Kraftfahrzeug befestigbar ist, aufweisen. Das Spiegelelement und das Gehäuse sind starr miteinander verbunden und zwischen Gehäuse und Spiegelfuß ist ein Verstellgetriebe angeordnet, das durch einen Elektromotor angetrieben werden kann.

Ausgehend von diesem Stand der Technik ist es Aufgabe der vorliegenden Erfindung einen neuen Außenrückspiegel vorzuschlagen, der besser vor ungewollter Verstellung, beispielsweise verursacht von Vibrationen, geschützt ist.

Diese Aufgabe wird durch einen Außenrückspiegel nach der Lehre des Patentanspruchs 1 gelöst.

Bevorzugte Ausführungsformen der Erfindung sind Gegenstand der Unteransprüche.

Erfindungsgemäß sind das Spiegelelement und das Gehäuse starr miteinander verbunden. Da eine Verstellung des Spiegelelements im Gehäuse nicht erfolgt, muß das Spiegelelement nicht im Innenbereich des Gehäuses angeordnet werden. Die Anordnung des Spiegelelements kann somit beliebig nahe am Außenrand der Gehäuseöffnung angeordnet werden, wodurch das notwendige Bauvolumen reduziert wird. Je kleiner der überstehende Rand der Gehäusewandung gegenüber der Spiegelfläche ist, um so größer ist das vom Fahrer einsehbare Blickfeld und um so gründlicher erfolgt die Reinigung der Spiegelfläche mit herkömmlichen Reinigungsvorrichtungen, beispielsweise einer Waschanlage.

Da Spiegelelement und Gehäuse starr miteinander verbunden sind, entfällt der Spalt zwischen Gehäuse und Spiegelelement und die durch den Außenrückspiegel erzeugten Windgeräusche werden dadurch zusätzlich reduziert.

Das größtmögliche Blickfeld bei kleinstem Bauvolumen und niedrigstem Geräuschniveau ergibt sich, wenn das Spiegelelement im wesentlichen bündig an die Außenseite des Gehäuses anschließend angeordnet ist.

Um das Spiegelelement relativ zur Karosserie verstellen zu können, ist erfindungsgemäß zwischen Gehäuse und Spiegelfuß ein Verstellgetriebe angeordnet, das durch zumindest einen Elektromotor verstellbar ist. Vorzugsweise kann das Verstellgetriebe um zwei nicht parallel zueinander verlaufende Drehachsen verschwenkt werden, um das Spiegelelement sowohl gegenüber der Vertikalen als auch der Horizontalen einstellen zu können.

Nachfolgend wird die Erfindung anhand lediglich bevorzugte Ausführungsformen darstellender Zeichnungen näher erläutert. Es zeigen:
- **Fig. 1**: einen erfindungsgemäßen Außenrückspiegel in schematischer Darstellung;
- **Fig. 2**: den Außenrückspiegel nach **Fig. 1** im gebrochen dargestellten Längsschnitt;
- **Fig. 3**: das Verstellgetriebe eines erfindungsgemäßen Außenrückspiegels im Längsschnitt;
- **Fig. 4**: in schematischer Darstellung eine zweite Ausführungsform eines erfindungsgemäßen Außenrückspiegels im Längsschnitt von oben;
- **Fig. 5**: die Explosionszeichnung eines erfindungsgemäßen Außenrückspiegels.

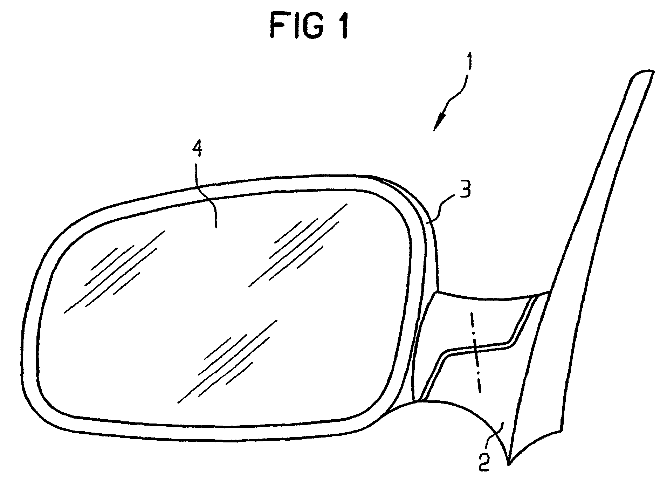

**Fig. 1** zeigt einen schematisch dargestellten Außenrückspiegel 1 mit einem Spiegelfuß 2, der an einer nicht dargestellten Kfz-Karosserie befestigbar ist und einem Gehäuse 3, das mit einem Spiegelelement 4 starr verbunden ist. Die Verbindung zwischen Spiegelfuß 2 und Gehäuse 3 ist in zwei Achsen schwenkbar ausgestaltet.

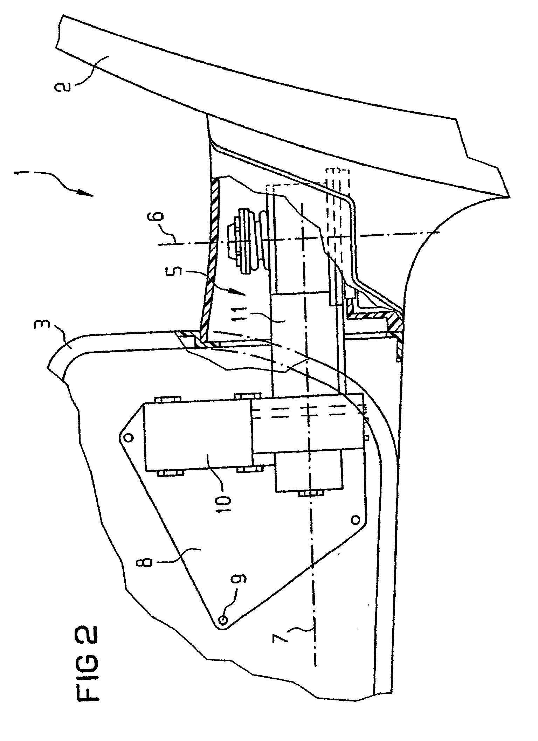

**Fig. 2** zeigt einen gebrochen dargestellten Längsschnitt durch den Außenrückspiegel 1.

Man erkennt, daß der Spiegelfuß 2 und das Gehäuse 3 mittels eines Verstellgetriebes 5 miteinander verbunden sind. Das Verstellgetriebe 5 ist um die Drehachsen 6 und 7 verschwenkbar, so daß die Spiegelfläche des starr mit dem Gehäuse 3 verbundenen Spiegelelements 4 sowohl horizontal als auch vertikal einstellbar ist. Die mit dem Verstellgetriebe 5 verbundene Verstärkerplatte 8 wird mittels dreier Befestigungsschrauben 9 mit dem Gehäuse 3 verbunden. Die für die Verstellung des Gehäuses 3 erforderlichen Stellbewegungen werden von den Elektromotoren 10 und 11 erzeugt.

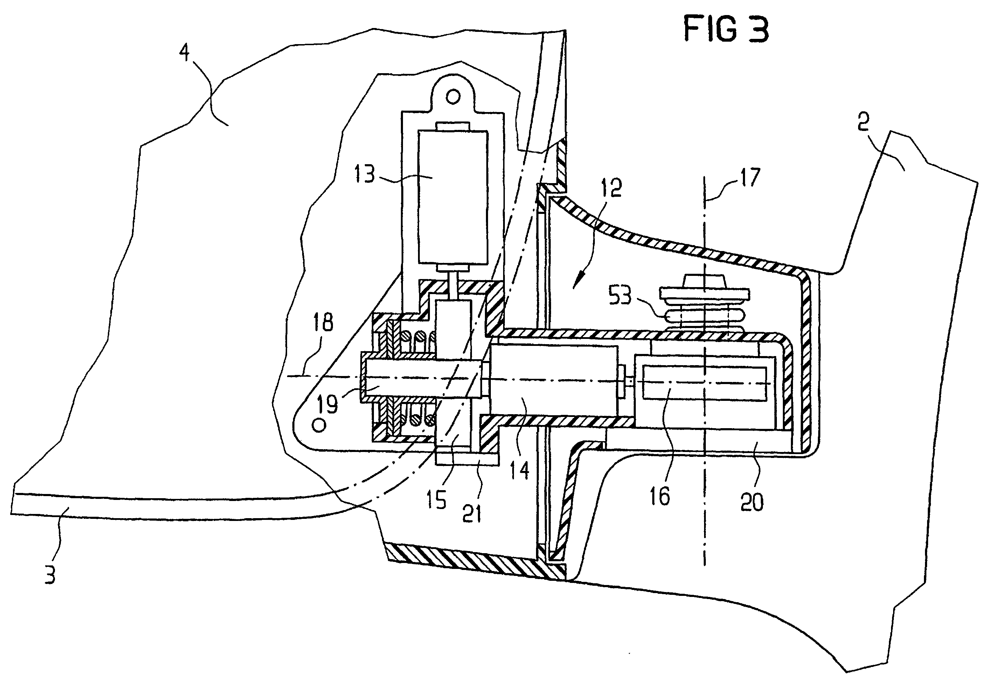

**Fig. 3** zeigt einen Längsschnitt durch ein Verstellgetriebe 12 mit Elektromotoren 13 und 14. Die Antriebswellen der Elektromotoren 13 und 14 greifen in die Schneckengetriebe 15 und 16 ein, die die Antriebsbewegung der beiden Elektromotoren in eine Schwenkbewegung des Gehäuses 3 um die Vertikalachse 17 bzw. Horizontalachse 18 untersetzen.

An den Schneckengetriebe 15 und 16 sind die Verdrehsicherungen 19 und 53 angeordnet, die ein ungewolltes Verschwenken des Gehäuses 3 infolge von Vibrationen ausschließen. Zwischen dem Schneckengetriebe 16 und dem Spiegelfuß 2 ist eine Rastscheibe 20 angeordnet, die ein Verdrehen des Gehäuses 3 um die Vertikalachse 17 beim Überschreiten einer am Gehäuse 3 angreifenden Last ermöglicht, so daß der Außenrückspiegel den vorgeschriebenen Pendelschlagversuch, der den Aufprall eines Kinderkopfes auf den Außenrückspiegel simuliert, erfüllt. Die Übertragung des um die Horizontalachse 18 wirkenden Drehmoments erfolgt über eine Rutschkupplung 21, die beim Überschreiten einer am Gehäuse 3 angreifenden äußeren Last durchrutscht. Durch die Rastscheibe 20 und die Rutschkupplung 21 kann der Außenrückspiegel auch beim Ausfall des elektrischen Antriebs des Verstellgetriebes 12 eingestellt werden.

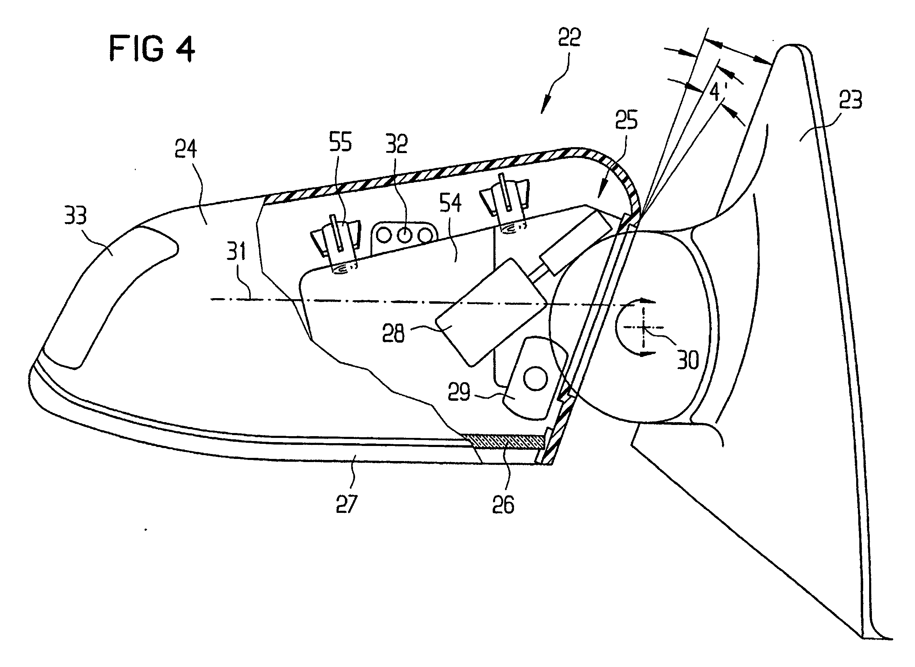

**Fig. 4** zeigt ein weiteres Ausführungsbeispiel 22 eines erfindungsgemäßen Außenrückspiegels mit einem Spiegelfuß 23, einem gebrochen dargestellten Gehäuse 24 und einem Verstellgetriebe 25. Das Spiegelelement 26 ist mittels eines umlaufenden Befestigungsrings 27 an dem Gehäuse 24 befestigt. Dazu wird der Ring 27 an dem Gehäuse 24 eingeclipst. Damit schließt das Spiegelelement 26 im wesentlich bündig an die Außenseite des Gehäuses 24 an. Das Verstellgetriebe 25 kann mittels des Vertikalantriebsmotors 28 und des Horizontalantriebsmotors 29 verstellt werden, so daß das Gehäuse 24 um die Vertikalachse 30 bzw. um die Horizontalachse 31 drehend verschwenkt wird. Das Verstellgetriebe 25 ist mittels der Verstärkerplatte 54 mit dem Gehäuse 24 verschraubt. Das Gehäuse 24 weist dazu auf seiner Innenseite mehrere an der Bauteilwandung angeformt Gewindehülsen 55 auf. In das Gehäuse 24 sind als zusätzliche Funktionen eine aus LED's aufgebaute Einstiegsbeleuchtung 32 und ein Fahrtrichtungsanzeiger 33 integriert.

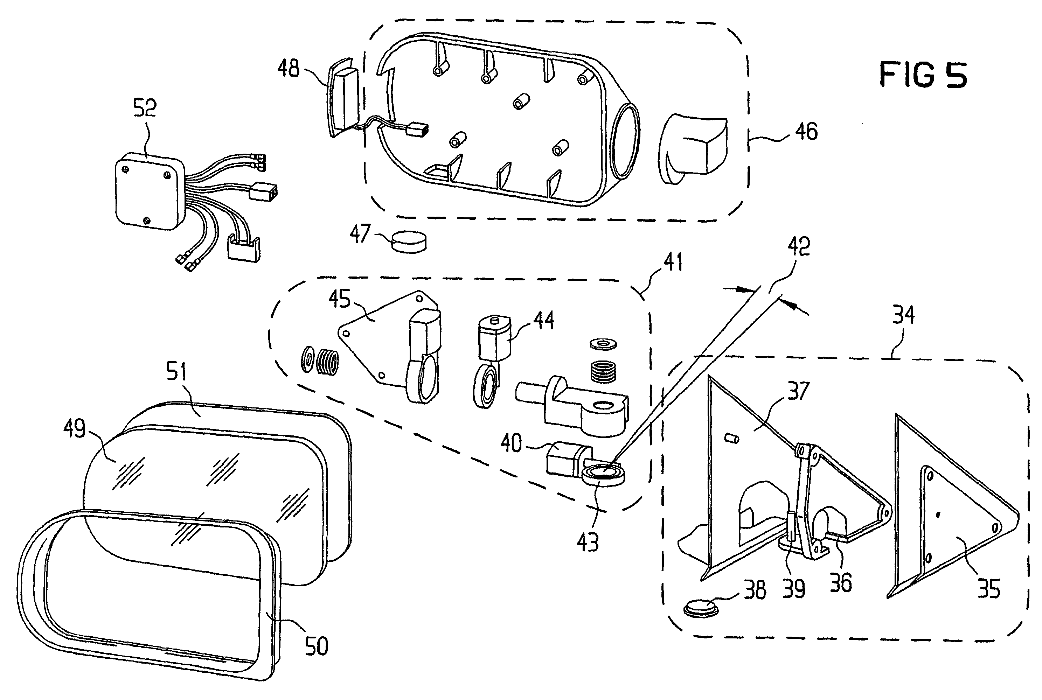

**Fig. 5** zeigt die Explosionszeichnung eines erfindungsgemäßen Außenrückspiegels, wobei die Bauteile der verschiedenen Baugruppen gestrichelt eingerahmt sind. Der Spiegelfuß 34 ist aus einer Unterlage 35, einem Fußchassis 36, einer Verkleidung 37 und einer Abdeckkappe 38 aufgebaut.

Auf einem Stehbolzen 39 des Fußchassis 36 ist ein Y-Achsen-Antrieb 40 des Verstellgetriebes 41 angeordnet. Mittels des Antriebs 40 kann das Gehäuse 46 innerhalb eines Schwenkwinkels von +/- 4 Grad im Schwenkbereich 42 verstellt werden. Der Schwenkbereich kann in Abhängigkeit vom Fahrzeugtyp variiert werden. Unter dem Antrieb 40 ist eine Rastscheibe 43 angeordnet.

An den Antrieb 40 schließt sich ein X-Achsen-Antrieb 44 an, der auf eine Verstärkerplatte 45 wirkt, welche ihrerseits mit dem Gehäuse 46 verbunden ist. In das Gehäuse 46 sind als weitere Funktionselemente eine Einstiegsleuchte 47 und ein Fahrtrichtungsanzeiger 48 integriert.

Das Spiegelelement 49 wird mittels des Halterings 50 an dem Gehäuse 46 befestigt. Um ein Vereisen des Spiegelelements 49 auszuschließen, ist auf dessen Rückseite ein Heizelement 51 angeordnet. Die Steuerbefehle zur Steuerung der verschiedenen Funktionen des Spiegels werden durch ein Spiegel-Bus-Modul 52 an die verschiedenen Aktoren übertragen.

## Patentansprüche

1. Elektrisch verstellbarer Außenrückspiegel (1) für ein Kraftfahrzeug, mit einem Spiegelelement (4), einem Gehäuse (3), und einem Spiegelfuß (2), der am Kraftfahrzeug befestigbar ist, wobei das Spiegelelement (4) und das Gehäuse (3) starr miteinander verbunden sind und zwischen Gehäuse (3) und Spiegelfuß (2) ein Verstellgetriebe (5) angeordnet ist, das durch zumindest einen Elektromotor (13, 14) angetrieben werden kann,
**dadurch gekennzeichnet,**
**dass** zur Übertragung der Antriebsbewegung vom Elektromotor (13, 14) aufs Gehäuse (3) im Verstellgetriebe (5) zumindest ein Schneckengetriebe (15, 16) angeordnet ist, wobei am Scheckengetriebe (15, 16) zumindest eine Verdrehsicherung (19, 53) zur Vermeidung von ungewollten Schwenkbewegungen des Gehäuses (3) infolge von Vibrationen vorgesehenen ist.

2. Außenrückspiegel nach Anspruch 1,
**dadurch gekennzeichnet,**
**dass** das Spiegelelement (4) im Wesentlichen bündig an die Außenseite des Gehäuses (3) anschließend angeordnet ist.

## Claims

1. Electrically adjustable external rear view mirror (1) for a motor vehicle, comprising a mirror element (4), a housing (3), and a mirror base (2), which is fixable on the motor vehicle, wherein the mirror element (4) and the housing (3) are rigidly connected to one another and there is disposed between housing (3) and mirror base (2) an adjustment gear (5), which may be driven by at least one electric motor (13, 14), **characterized in**
**that** for transmitting the driving movement from the electric motor (13, 14) to the housing (3) at least one worm gear (15, 16) is disposed in the adjustment gear (5), wherein provided on the worm gear (15, 16) is at least one anti-rotation element (19, 53) for preventing unwanted swivelling movements of the housing (3) as a result of vibrations.

2. External rear view mirror according to claim 1, **characterized in**
**that** the mirror element (4) is disposed so as to adjoin the outside of the housing (3) in a substantially flush manner.

## Revendications

1. Rétroviseur extérieur (1) à réglage électrique pour un véhicule automobile, comprenant un miroir (4), un boîtier (3) et un pied de rétroviseur (2) qui peut être fixé au véhicule automobile, dans lequel le miroir (4) et le boîtier (3) sont reliés rigidement l'un à l'autre et où un mécanisme de réglage (5) qui peut être entraîné par au moins un moteur électrique (13, 14) est disposé entre le boîtier (3) et le pied de rétroviseur (2),
**caractérisé**
**en ce qu'**il est prévu, pour la transmission du mouvement d'entraînement du moteur électrique (13, 14) au boîtier (13), au moins un mécanisme à vis sans fin (15, 16) agencé dans le mécanisme de réglage (5), au moins un blocage de rotation (19, 53) étant prévu dans le mécanisme à vis sans fin (15, 16) pour prévenir les mouvements d'oscillation intempestifs du boîtier (3) qui résulteraient de vibrations.

2. Rétroviseur extérieur selon la revendication 1,
**caractérisé**
**en ce que** le miroir (4) est disposé sensiblement à l'affleurement du côté extérieur du boîtier (3).
